# EUROPÄISCHE PATENTSCHRIFT

(11) **EP 2 286 974 B1**
(45) Veröffentlichungstag und Bekanntmachung des Hinweises auf die Patenterteilung: **07.11.2012**
(21) Anmeldenummer: 10008688.3
(22) Anmeldetag: 19.08.2010
(51) Int. Cl.: B29C 33/48, B29C 45/44, B22D 17/22, B29C 43/42, B29C 43/50

(54) **Formvorrichtung und Verfahren zum Entformen eines Gegenstandes**
Forming device and method for removing an object
Dispositif de formage et procédé d'enlèvement d'un objet

(30) Priorität: 19.08.2009 DE 102009037981
(43) Veröffentlichungstag der Anmeldung: 23.02.2011
(73) Patentinhaber: Christian Karl Siebenwurst Modellfabrik und Formenbau GmbH & Co. KG, 92345 Dietfurt a. d. Altmühl (DE)
(72) Erfinder: Grad, Johannes, 91171 Greding (DE)
(74) Vertreter: Samson & Partner

(56) Entgegenhaltungen:
- ES-A1- 2 238 881
- JP-A- 8 238 652
- US-B1- 7 140 868

## Beschreibung

Die Erfindung betrifft eine Formvorrichtung zur Herstellung von geformten Gegenständen sowie ein Verfahren zum Entformen eines Gegenstandes in einer Formvorrichtung.

Formvorrichtungen werden auch als Werkzeuge bezeichnet und finden allgemein Verwendung zur Herstellung von geformten Gegenständen. Dazu umfasst eine Formvorrichtung üblicherweise zwei Formhälften, die eine Formoberseite sowie eine Formunterseite bilden. Die Formoberseite und die Formunterseite werden auch als Angussseite und Ausstoßseite bezeichnet. Dazwischen ist bei einer geschlossenen Formvorrichtung ein Hohlraum gebildet.

Zum Formen eines Gegenstandes werden die Formoberseite und die Formunterseite über einen Schließmechanismus verschlossen. Ein zunächst unförmiges Material wird in den Hohlraum eingebracht und geformt. Bei dem Material kann es sich beispielsweise um Granulat oder auch um eine Schmelze handeln. Zum Einbringen des Materials in die Form sind verschiedene Verfahren bekannt. Die Materialien können beispielsweise Metall oder Kunststoff umfassen.

Formvorrichtungen können beispielsweise beim Spritzgießen bzw. Spritzgussverfahren eingesetzt werden. Dieses Urformverfahren dient hauptsächlich zur Kunststoffverarbeitung. Dabei wird ein Kunststoffgranulat eingeschmolzen und die flüssige Kunststoffschmelze über Zufuhrleitungen in den Hohlraum eingespritzt. Nach dem Erkalten der Schmelze werden die beiden Formhälften auseinander gefahren, wobei der erstarrte Gegenstand aus der Form entnommen werden kann.

Auch ist der Einsatz von Formvorrichtungen bei Druckgussverfahren bekannt. Hierbei werden metallische Materialien mit einem niedrigen Schmelzpunkt, beispielsweise Aluminium, Zink oder Magnesium, verwendet. Bei den verschiedenen Druckgussverfahren wird die flüssige Schmelze unter hohem Druck und mit hoher Geschwindigkeit in die Form eingebracht. Auch hier erstarrt die Schmelze nach kurzer Zeit.

Nach dem Öffnen der Formhälften verbleibt der geformte Gegenstand, beispielsweise ein Spritzling oder ein Gießling, zunächst in der unteren oder oberen Formhälfte und wird anschließend über eine Ausstoßvorrichtung ausgeworfen. Sofern der hergestellte Gegenstand hinterschnittige Geometrien aufweist, wäre kein Öffnen der Formoberseite und/oder eine Entnahme des Gegenstandes aus der Formhälfte in der so genannten Trennebene nach oben beziehungsweise nach unten möglich. Hinterschnittige Geometrien meint Aus- oder Einbuchtungen, Überstände und ähnliches am herzustellenden Gegenstand, die eine Formhälfte oder Form von innen oder von außen hintergreift. Entformen meint die Entnahme bzw. das Ausstoßen des gefertigten Gegenstandes aus der Form. Die Position der Hinterschneidung bestimmt die Öffnungsrichtung beim Entformen und den Aufwand bei Herstellung einer Formvorrichtung.

Zum Entformen hinterschnittiger Geometrien sind aus dem Stand der Technik hydraulisch betätigte Schiebermechanismen bekannt. Diese Schiebermechanismen werden beim Spritzgießen und Druckgießen verwendet und weisen einen komplizierten Aufbau auf. Selbst kleine Hinterschneidungen am herzustellenden Gegenstand können die Herstellung einer Formvorrichtung stark verteuern.

Ferner sind aus dem Stand der Technik hydraulisch betätigte, sogenannte Führungspinolen bekannt, die einen hergestellten Gegenstand zum Entformen hinterschnittiger Geometrien führen. Solche Führungspinolen sind an ihrer Unterseite in einer Kulissenführung verschiebbar geführt, beispielsweise über einen Hydraulikzylinder. Dabei wirken hohe Kräfte, unter anderem Knickkräfte, auf die Kulissenführung und den Hydraulikzylinder, so dass die Führungspinole und der Hydraulikzylinder verkanten können. Das Verkanten kann zu einer Blockade der gesamten Formvorrichtung führen.

Weiter haben bekannte Führungspinolen einen hohen Platzbedarf, da auch der Hydraulikzylinder in der Formvorrichtung untergebracht werden muss. Oftmals sind mehrere Führungspinolen erforderlich, die allesamt jeweils mit einem Hydraulikzylinder verbunden sind. Dies erfordert wiederum große Ausnehmungen im Werkzeug bzw. der Formvorrichtung. Die Ausnehmungen schwächen das Werkzeug. Um diese Schwächung auszugleichen, muss die Formvorrichtung entsprechend vergrößert werden. Dazu können beispielsweise zusätzliche Platten montiert werden. Erfolgt keine Vergrößerung bzw. Verstärkung der Formvorrichtung, kann die Schwächung eine sogenannte Gratbildung verursachen. Dies kann wiederum zu ungewünschte Veränderungen an der Oberfläche der herzustellenden Gegenstände führen, was die Qualität mindert. Darüber hinaus sind diese bekannten Führungspinolen nur bis maximal 45° zur Hauptentformungsrichtung verschwenkbar.

DE 42 03 696 C2 offenbart eine Vorrichtung zum Spritzgießen eines Formteils aus Kunststoff mit einem Düsenteil sowie einem Formteil. Seitlich an einem zu formenden Gegenstand miteinander gekoppelte zwangsgeführte Schieber sowie Formbacken angeordnet. Die Schieber können als Auswurfelement wirken.

Ferner zeigt die DE 100 22 192 A1 eine Einrichtung zum Entfernen von Spritzgießteilen bei der eine Ausstoßvorrichtung außerhalb von Formhälften angeordnet sind. Mit einer Antriebseinheit sind eine oder mehrere Ausstoßstangen linear zur Form oder von dieser weg bewegbar sind.

JP 8 238652 A offenbart eine Formvorrichtung und ein Verfahren gemäß der Oberbegriffe der unabhängigen Ansprüche.

Insgesamt sind die aus dem Stand der Technik bekannten Lösungen kompliziert im Aufbau, kostenintensiv in der Herstellung und nur begrenzt einsetzbar.

Vor diesem Hintergrund ist es Ziel der Erfindung eine verbesserte Formvorrichtung sowie ein verbessertes Verfahren zum Entformen eines Gegenstandes in einer Formvorrichtung bereitzustellen.

Diese Ziele werden durch die Gegenstände der unabhängigen Ansprüche erreicht. Bevorzugte Ausführungsformen sind in den Unteransprüchen angegeben.

« Während die Erfindung in den unabhängigen Ansprüchen definiert wird, werden weitere Aspekte in den abhängigen Ansprüchen angegeben.

Nach Anspruch 1 umfasst eine erfindungsgemäße Formvorrichtung zum Spritz- oder Druckgießen wenigstens ein erstes Formelement, wenigstens ein zweites Formelement, wenigstens eine Öffnungsvorrichtung zum Öffnen oder Schließen der Formelemente, und wenigstens ein separates Auswurfelement, welches an der Rückseite eines der Formelemente angeordnet ist und über ein Kopplungselement zum Entformen eines Gegenstandes mit wenigstens einem der Formelemente gekoppelt ist, wobei ein erstes Führungselement im Auswurfelement verschiebbar angeordnet ist und von einem zweiten starren Führungselement geführt ist., das Kopplungselement vom ersten Führungselement geführt ist, und im ersten Führungselement eine Ausnehmung ausgebildet ist, in die das zweite Führungselement zur Bildung einer Zwangsführung einsetzbar ist.

Ebenso stellt die Erfindung auch ein Verfahren zum Entformen eines Gegenstandes mit einer erfindungsgemäßen Formvorrichtung bereit. Das Verfahren umfasst die Schritte: Schließen eines ersten und eines zweiten Formelements; Einbringen, Formen und Aushärten einer Formmasse in einem zwischen den Formelementen gebildeten Hohlraum; Betätigen eines separat, an der Rückseite eines der Formelemente angeordneten Auswurfelements beim oder nach dem Öffnen der Formelemente, wobei ein über ein Kopplungselement mit wenigstens einem Formelement gekoppeltes erstes Führungselement im Auswurfelement verschoben und von einem zweiten starren Führungselement geführt wird, und wobei im ersten Führungselement eine Ausnehmung ausgebildet ist, in der das zweite Führungselement zur Bildung einer Zwangsführung geführt wird.

Die Formvorrichtung kann beispielsweise im Spritzgussverfahren zur Herstellung von Gegenständen aus Kunststoff oder im Druckgussverfahren für die Herstellung von metallischen Gegenständen Verwendung finden. Sowohl Spritzguss- als auch Druckgussverfahren haben den Vorteil, dass sich große Stückzahlen mit dem gleichen Satz an Formenelementen herstellen lassen.

In den Innenseiten der Formelemente, die auch als Formen oder als Formhälften bezeichnet werden, sind mit Hilfe von Werkzeugmaschinen die Formkonturen des herzustellenden Gegenstandes als Negativabdruck eingearbeitet. Insgesamt können beliebig viele Formelemente verwendet werden, die beispielsweise in verschiedenen Ebenen geöffnet werden. Bevorzugt werden zwei Formhälften verwendet, da dies einen einfachen Aufbau der Formvorrichtung zur Folge hat. Die geschlossenen Formelemente bzw. Formhälften bilden zusammen einen Hohlraum in dem der herzustellende Gegenstand hergestellt wird. Um den Verschleiß der Formvorrichtung zu reduzieren, kann gehärteter oder vergüteter Werkzeugstahl und/oder Hartmetall verwendet werden.

Eine Öffnungs/Schließvorrichtung kann zum Öffnen oder Schließen der Formelemente beispielsweise einen pneumatischen, hydraulischen oder elektrisch betätigten Hubmechanismus umfassen.

Das Auswurfelement kann als Auswerferplatte im ersten und/oder zweiten Formelement angeordnet sein und beispielsweise auch einen pneumatischen, hydraulischen oder elektrisch betätigten Hubmechanismus umfassen. Der Hubmechanismus ist ausgelegt, um die Auswerferplatte und das Kopplungselement zum Ausstoßen eines hergestellten Gegenstandes zu Heben und danach zu senken. Der Hubmechanismus des Auswerfelements kann auch mit dem Hub der Öffnungsvorrichtung gekoppelt sein. Vorteilhaft ist die Auswerferplatte gering dimensioniert, so dass die Formvorrichtung wenig geschwächt wird. Damit lässt sich eine Gratbildung vermindern bzw. verhindern.

Das Führungselement kann als Führungsplatte ausgebildet sein, die im Auswurfelement verschiebbar angeordnet ist. Die Kopplung des Führungselements über das Kopplungselement mit wenigstens einem Formelement kann mit geeigneten Mitteln, beispielsweise über eine Stange oder ähnliches erfolgen. Eine Führungspinole hat sich als besonders geeignet erwiesen. Diese kann zur Kopplung das wenigstens eine Formelement in einer Ausnehmung durchdringen. In dieser Ausnehmung im Formelement kann das Kopplungselement bewegbar oder verschiebbar geführt sein. Vorteilhaft ist so eine sicher Führung des Kopplungselementes gewährleistet. Alternativ kann die Kopplung des Kopplungselementes mit dem Formelement auch über eine zusätzlich am oder im Formelement angeordnete und ausgebildete Führungsvorrichtung erfolgen.

Das Kopplungselement kann am oberen Ende mit einem Schieber beziehungsweise einem Schieberkopf und an einem unteren Ende mit dem Führungselement gekoppelt oder verbunden sein. Alternativ kann der Schieber auch einstückig am Kopplungselement ausgebildet sein. Der Schieber greift an einer Seite, zumeist der Unterseite oder Innenseite eines hergestellten Gegenstandes an, um diesen auszustoßen. Das zweite starre Führungselement kann als eine Stange, ein Rohr, als Vierkant oder auch als beliebiges anderes geeignetes Mittel zur Führung des ersten Führungselements ausgelegt sein. Bevorzugt ist es als Führungspinole ausgebildet, die beispielsweise an ihren Enden in der Formvorrichtung verankert ist.

Bei der erfindungsgemäßen Formvorrichtung wird bei Betätigung der Öffnungsvorrichtung das erste Formelement gegenüber dem zweiten Formelement oder das zweiten Formelement gegenüber dem ersten Formelement angehoben oder gesenkt. Zusätzlich kann über die Öffnungsvorrichtung oder den zusätzlichen Hubmechanismus das Auswurfelement betätigt, beispielsweise angehoben werden, wobei das Kopplungselement sowie dessen Schieberkopf und/oder das erste Führungselement angehoben und verschoben werden können. Dies bewirkt vorteilhaft eine horizontale und vertikale Bewegung des hergestellten Gegenstandes und/oder des Schieberkopfes in Bezug auf die wenigstens eine Formhälfte. Das Kopplungselement hebt also mit dem Schieberkopf einen zu entformenden, hergestellten Gegenstand aus wenigstens einem Formelement. Dabei kann der hergestellte Gegenstand nach Art einer Parallelverschiebung im Verhältnis zum ersten Auswurfelement verschoben werden. So lassen sich Hinterschneidungen einfach entformen.

Insgesamt können jeweils bei einer erfindungsgemäßen Formvorrichtung ein oder mehrere Kopplungselemente und/oder ein oder mehrere erste und/oder zweite Führungselemente Verwendung finden.

Weitere Ausführungsformen sind nachfolgend angegeben.

Bei der erfindungsgemäßen Formvorrichtung kann das erste Führungselement eine Ausbildung umfassen, die mit einer Ausnehmung im Auswerfelement zur verschiebbaren Führung des ersten Führungselements zusammenwirkt. Alternativ kann in der erfindungsgemäßen Formvorrichtung das Auswerfelement eine Ausbildung umfassen, die mit einer Ausnehmung im ersten Führungselement zur verschiebbaren Führung des ersten Führungselements zusammenwirkt.

Somit können die Ausbildung oder die Ausnehmung im Führungselement oder im Auswerfelement angeordnet sein, beispielsweise nach Art einer Nut-Federführung. Auch können sonstige geeignete Führungsmechanismen verwendet werden, beispielsweise Führungsschienen oder ähnliches.

Ferner kann bei der erfindungsgemäßen Formvorrichtung das Auswerfelement wenigstens ein Führungsmittel umfassen, das mit dem Auswerfelement integral ausgebildet oder daran gekoppelt ist, um das erstes Führungselement verschiebbar zu führen. Diese Ausbildung und Ausnehmung und/oder Führungsmittel können ebenso nach Art einer Nut-Federführung ausgebildet sein. Sie können aber auch sonstige geeignete Führungsmechanismen umfassen, beispielsweise Führungsschienen oder ähnliches.

Die Ausbildung und Ausnehmung und/oder die Führungsmittel können direkt in dem Auswerfelement ausgebildet sein. Alternativ können sie als zusätzliche Führungsschiene am Auswerfelement angeordnet sein. Die Führungsschienen sind vorteilhaft für eine schnelle Demontage mit dem Auswerfelement über eine Schraubverbindung verbunden. Alternativ können die Führungsschienen auch angeschweißt oder beliebig anders geeignet befestigt werden. Das erste Führungselement kann dann innerhalb der seitlich darin angeordneten Führungsschienen im Verhältnis zum Auswerfelement verschoben werden.

Bei der erfindungsgemäßen Formvorrichtung kann das Auswerfelement wenigstens eine Wirkfläche umfassen, die beim Betätigen des Auswerfelements mit wenigstens einer am ersten Führungselement ausgebildeten Gegenfläche zusammenwirkt, um das Führungselement anzutreiben bzw. abzubremsen. Die Wirkflächen und die Gegenfläche können als gegenläufig geneigte Flächen jeweils an den Stirnseiten des Auswerfelements beziehungsweise des ersten Führungselements einander gegenüberliegend ausgebildet sein. Um Reibungswiderstände zu minimieren können die Wirkflächen und die Gegenflächen Gleitabschnitte umfassen. Die Gleitabschnitte können als zueinander komplementäre Schrägflächen ausgebildet sein.

Weiter kann bei der erfindungsgemäßen Formvorrichtung das zweite Führungselement an einem ersten Endbereich mit wenigstens einem der Formelemente oder der Formplatte gekoppelt sein. Zusätzlich kann bei der erfindungsgemäßen Formvorrichtung das zweite Führungselement an einem zweiten Endbereich mit einem Aufspannelement gekoppelt sein. Bei einer Kopplung an beiden Endbereichen ist das Führungselement sicher festgelegt. Beispielsweise kann das Führungselement in Ausnehmungen, beispielsweise Bohrungen in einem der Formelemente oder Aufspannelement eingesetzt und beliebig befestigt, beispielsweise verstiftet, verschraubt oder eingelassen werden.

Bei der erfindungsgemäßen Formvorrichtung kann im ersten Führungselement eine Ausnehmung ausgebildet sein, in die das zweite Führungselement zur Bildung einer Zwangsführung einsetzbar ist. Die Ausnehmung kann beispielsweise eine Bohrung von geringer oder größerer Abmessung sein, wobei der Durchmesser der Bohrung geringfügig größer ist als die Abmessung des zweiten Führungselements, so dass das erste Führungselement entlang des zweiten Führungselements innerhalb der Ausnehmung gleiten oder geführt werden kann.

Ferner kann bei der erfindungsgemäßen Formvorrichtung das Kopplungselement verschiebbar im ersten Führungselement angeordnet sein. Das Kopplungselement kann beim Entformen eines Gegenstandes innerhalb des ersten Führungselements verschoben werden. Dadurch wird neben der Verschiebbarkeit des ersten Führungselements eine zweite verschiebbare Führungseinheit, das verschiebbare Kopplungselement bereitgestellt Somit sind insgesamt zwei verschiebbare Führungseinheiten und damit zwei Freiheitsgrade bereitgestellt. Vorteilhaft lässt sich damit das Entformen eines Gegenstandes mit einfachen Mitteln bewerkstelligen. Auch lässt sich über das Kopplungselement vorteilhaft der Öffnungswinkel des Schieberkopfes bzw. des Kopplungselementes weiter anpassen.

Bei der erfindungsgemäßen Formvorrichtung können das zweite Führungselement und das Kopplungselement entgegengesetzt zueinander angeordnet sein. Über diese Anordnung lassen sich mit einer erfindungsgemäßen Formvorrichtung noch größere Hinterschneidungen entformen, da jeweils der seitliche Versatz des Kopplungselementes innerhalb des ersten Führungselementes und des ersten Führungselementes innerhalb des Auswurfelementes vergrößert werden kann. Dabei wird der Winkel des Schieberkopfes zur Hauptentformungsrichtung verändert. Auch kann das erste Führungselement über die entgegen gesetzte Schrägstellung betätigt werden. Vorteilhaft lässt sich so eine flexibel einsetzbare Formvorrichtung bereitstellen.

Ferner können bei der erfindungsgemäßen Formvorrichtung beim Betätigen des Auswurfelements das erste Führungselement und das Kopplungselement entgegengesetzt zueinander verschoben werden. Dadurch lassen sich vorteilhaft steilere Hinterschneidungen entformen.

Weiter kann bei der erfindungsgemäßen Formvorrichtung das Kopplungselement eine Führungseinheit umfassen, die mit einer Ausnehmung im ersten Führungselement zur verschiebbaren Führung des Kopplungselements zusammenwirkt. Alternativ kann bei der erfindungsgemäßen Formvorrichtung auch das erste Führungselement eine Ausbildung umfassen, die mit einer Ausnehmung in der Führungseinheit des Kopplungselements zur verschiebbaren Führung des Kopplungselements zusammenwirkt. Die Führungseinheit kann beispielsweise schuhartig ausgebildet sein und kann auch ein Gelenk umfassen. Mit einer Gelenkverbindung lässt sich der Öffnungswinkel eines Formelementes einfacher einstellen.

Zur Verschiebung wird die Führungseinheit in der Ausnehmung, insbesondere in einer Führungsnut, geführt. Die Führung kann auch hier Nut-Feder-artig oder über beliebige andere geeignete Führungsmittel, beispielsweise Schienen, Kulissen etc. erfolgen.

Weiter kann bei der erfindungsgemäßen Formvorrichtung das Kopplungselement an einem Endbereich mit einem Schieberelement gekoppelt sein. Das Schieberelement kann zum Ausfahren eines hergestellten Gegenstandes aus wenigstens einem Formelement beim oder nach dem Öffnen der Formvorrichtung ausgelegt sein.

Das Schieberelement, beispielsweise ein Schieberkopf, kann über beliebig geeignete Befestigungsmittel mit dem Kopplungselement gekoppelt sein, beispielsweise verschraubt oder verstiftet. Beim Betätigen, beispielsweise Heben oder Senken, des Auswerfelements wird über das Kopplungselement auch der Schieberkopf angehoben oder gesenkt und/oder über einen Teil oder die gesamte Öffnungs- oder Schließbewegung zur Hauptentformungsrichtung verschwenkt beziehungsweise versetzt. Alternativ kann das Kopplungselement auch direkt auf einen hergestellten Gegenstand wirken.

Ferner kann der Schieberkopf derart ausgebildet sein, dass er beim Einspritzen bzw. in der Spritzstellung vollständig in wenigstens einem Formelement, beispielsweise in einer Ausnehmung, aufgenommen und gehalten wird. Bei Betätigung des Auswurfelements wird der Schieberkopf aus der Ausnehmung gefahren. Beim Auswerfen beziehungsweise beim Entformen des Gegenstandes kann der Schieberkopf mit diesem und/oder relativ zu dem Gegenstand verschoben werden, um Hinterschnitte in Richtung der Hauptentformungsrichtung zu Entformen. Der Schieberkopf kann also zur Hauptentformungsrichtung verschwenkt werden, was auch als Verzögerung und/oder Beschleunigung des Schieberkopfes bezeichnet wird. Erfindungsgemäß lassen sich eine Verzögerung bzw. Beschleunigung von bis zu 180° zur Hauptentformungsrichtung beziehungsweise von bis zu 90° zum Auswurfelement erreichen.

Bei der erfindungsgemäßen Formvorrichtung kann auch wenigstens ein Verriegelungsmechanismus zur Verriegelung des ersten Formelements mit dem zweiten Formelements vorgesehen sein. Ein Verriegelungsmechanismus sichert die Position der Formelemente beim Herstellen einen Gegenstandes gegen den Spritzdruck oder Gussdruck.

Insgesamt stellt die erfindungsgemäße Formvorrichtung eine platzsparende Vorrichtung zur Entformung von hinterschnittigen Geometrien eines herzustellenden Gegenstandes und ein Verfahren bereit, die beim Entformen eine Gegenstandes eine Verzögerung bzw. Beschleunigung von mehr als 135° bis zu 180° zur Hauptentformungsrichtung bzw. von mehr als 45° bis zu 90° zum Auswurfelement ermöglichen. Vorteilhaft sind fast nur Standardbauteile verwendbar, was die Herstellung vereinfacht und somit einen Kostenvorteil sichert. Auch hohe Kräfte, etwa der Spritzdruck, welche ansonsten über eine Kulisse und einen Hydraulikzylinder abgefangen werden müssten, können von der Formvorrichtung ohne Schwierigkeiten aufgenommen werden, ohne deren Funktionsweise zu beeinträchtigen. Schließlich ist die Abstimmung im Werkzeug einfach zu handhaben.

Auch kann das Verfahren den Schritt umfassen: Verschieben des Kopplungselements, wobei das erste Führungselement und das Kopplungselement gegeneinander verschoben werden. Dabei kann dann der Schieberkopf beim Auswerfen relativ zum geformten Gegenstand steiler verschoben werden.

Die Erfindung wird nun anhand von bevorzugten Ausfiihrungsformen unter Bezugnahme auf die beigefügten beispielhaften Figuren erläutert. Elemente, die sich in den verschiedenen Figuren entsprechen, tragen dieselben Bezugszeichen. Dabei zeigt:
- Fig. 1: eine Aufsicht auf eine erfindungsgemäße Formvorrichtung;
- Fig. 2: eine Querschnittsansicht der Formvorrichtung aus Fig. 1 in der Schnittebene A-A;
- Fig. 3: eine Querschnittsansicht der Formvorrichtung aus Fig. 1 in der Schnittebene B-B;
- Fig. 4: eine Querschnittsansicht der Formvorrichtung aus Fig. 1 in der Schnittebene C-C;
- Fig. 5: eine Aufsicht auf eine erfindungsgemäße Formvorrichtung in Spritzstellung;
- Fig. 6: eine Querschnittsansicht der erfindungsgemäßen Formvorrichtung aus Fig. 5 in der Schnittebene A-A;
- Fig. 7: eine Querschnittsansicht der Formvorrichtung aus Fig. 5 in der Schnittebene B-B;
- Fig. 8: eine Querschnittsansicht der Formvorrichtung aus Fig. 5 in der Schnittebene C-C;
- Fig. 9: eine weitere Querschnittsansicht der erfindungemäßen Formvorrichtung; und
- Fig.10: eine weitere Querschnittsansicht der erfindungemäßen Formvorrichtung.

In der Folge verwendete Lagebezeichnungen, wie oben, unten, vorne, hinten, rechts und links, beziehen sich aus der Sicht eines Betrachters auf eine vor ihm angeordnete Formvorrichtung, wobei der Betrachter auf eine Seitenfläche der Formvorrichtung schaut.

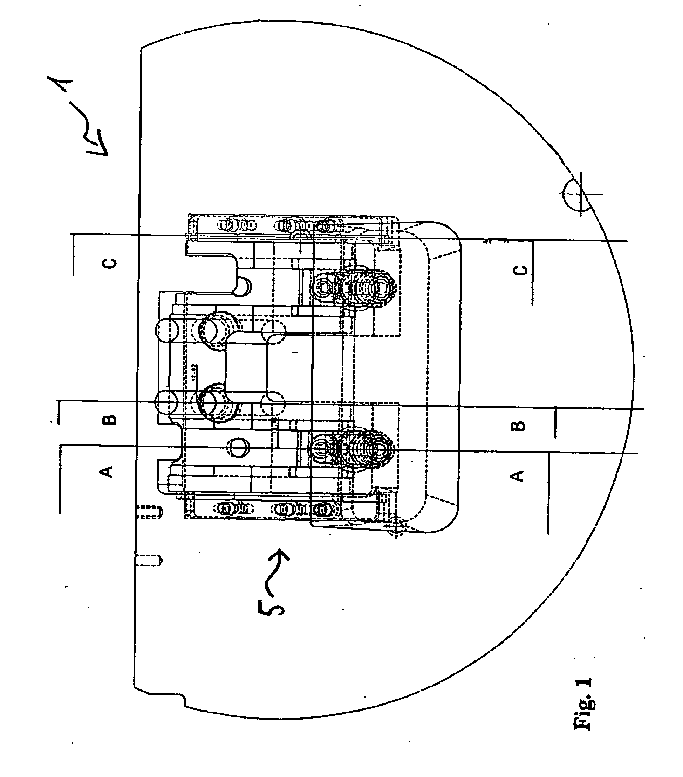

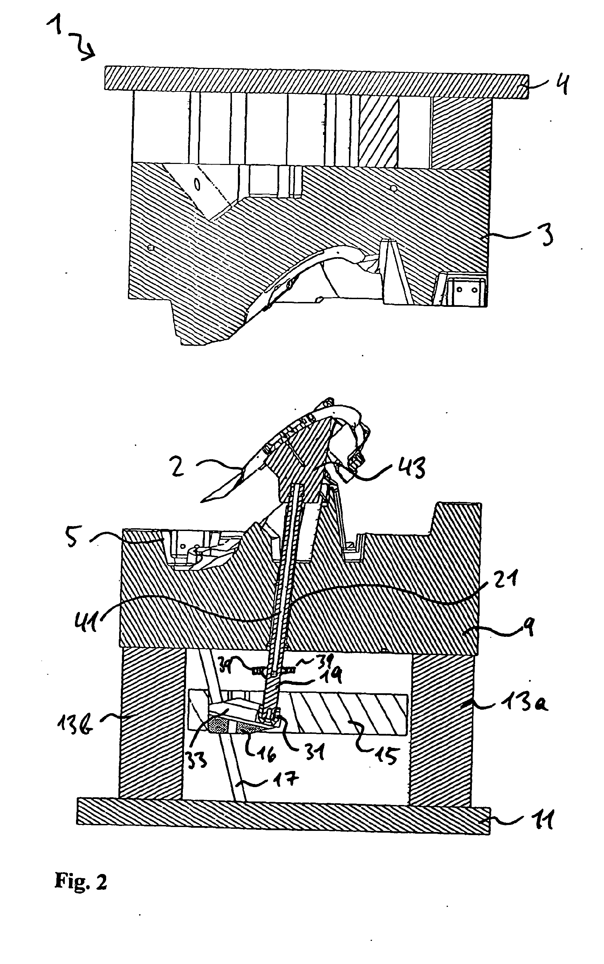

Figur 1 zeigt ausschnittsweise eine erfindungsgemäße Formvorrichtung 1, wobei die Schnittebenen A-A, B-B und C-C angegeben sind. Figuren 2 bis 4 zeigen diese Schnittebenen im Detail.

In den Figuren 1 bis 4 ist die erfindungsgemäße Formvorrichtung 1 in einer sogenannten Entnahmestellung dargestellt, in der gefertigte Gegenstände aus der Formvorrichtung 1 entnommen beziehungsweise ausgestoßen werden können.

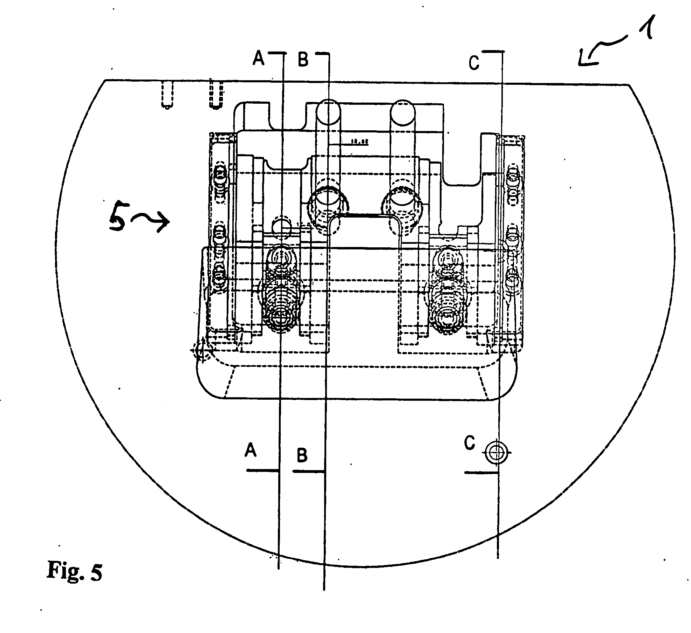

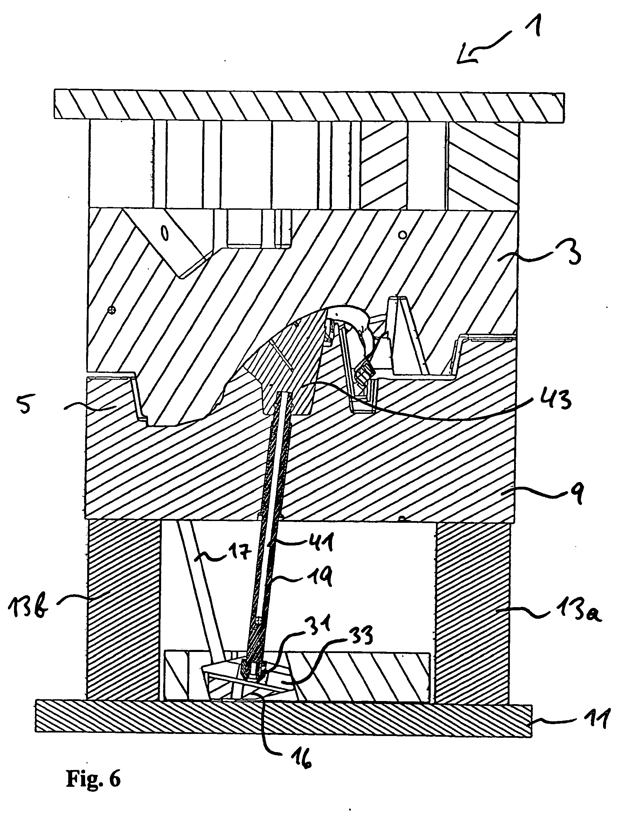

Figuren 5 bis 8 hingegen zeigen die erfindungsgemäße Formvorrichtung 1 in einer geschlossenen Stellung, der so genannten Spritzstellung, in der ein zu formender Gegenstand 2 hergestellt werden kann. Figur 5 zeigt dabei ausschnittsweise eine Aufsicht auf die Formvorrichtung 1 und gibt die Schnittebenen A-A, B-B und C-C an. Diese Schnittebenen sind in den Figuren 6 bis 8 im Detail dargestellt.

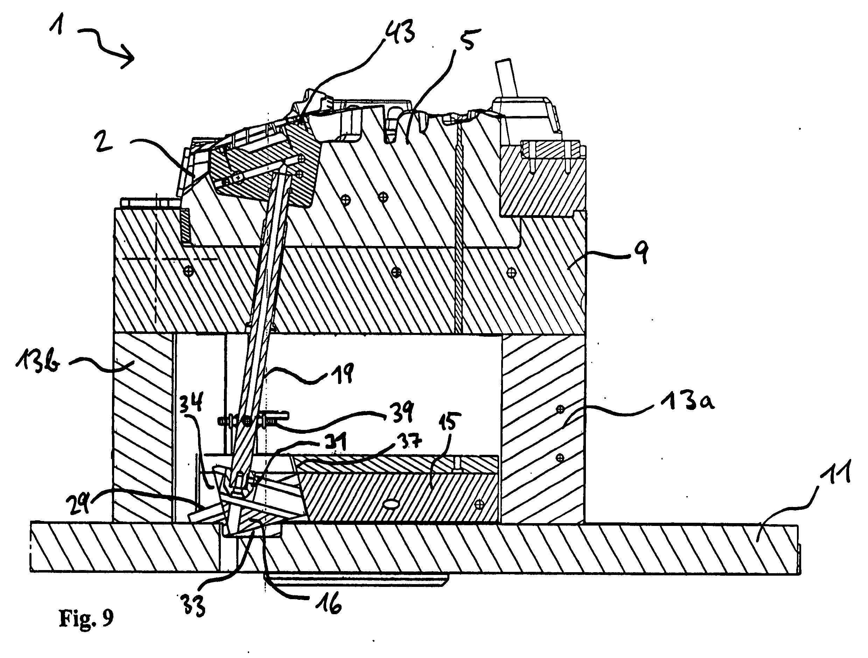

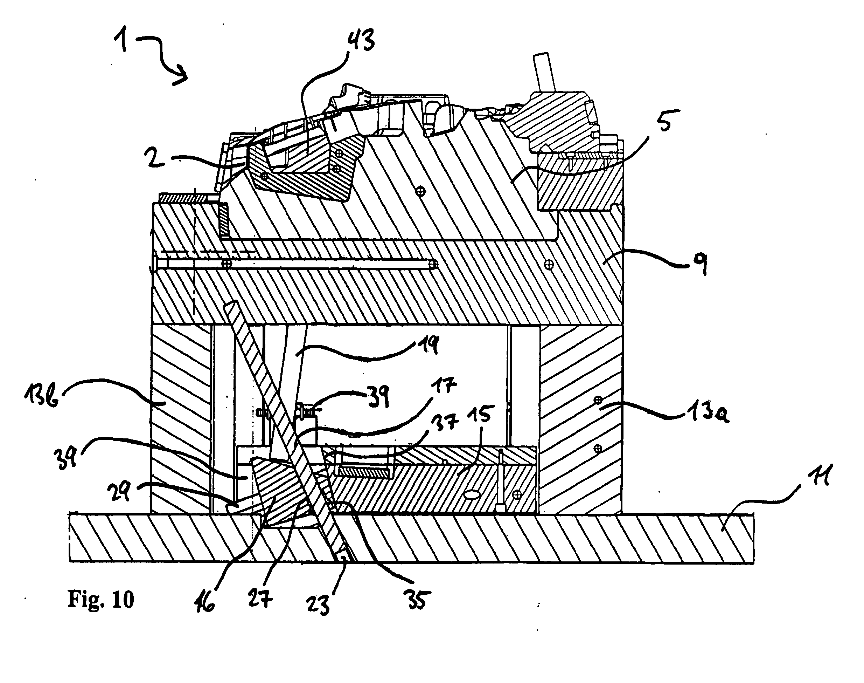

Figuren 9 und 10 zeigen zwei weitere Querschnittsansichten der erfindungemäßen Formvorrichtung 1.

Die erfindungsgemäße Formvorrichtung 1 umfasst zwei Formelemente, ein Formoberteil 3 und ein Formunterteil 5, die aus beliebigen Materialien hergestellt sein können. Zur Herstellung von kleineren Serien herzustellender Gegenstände können die Formteile beispielsweise aus Aluminium bestehen. Zur Herstellung von größeren Serien sind jedoch das Formoberteil 3 und das Formunterteil 5 üblicherweise aus Stahl gefertigt. Um den Verschleiß des Formoberteils 3 und Formunterteils 5 zu reduzieren, kann gehärteter oder vergüteter Werkzeugstahl und/oder Hartmetall verwendet werden. In den Innenseiten des Formoberteils 3 und des Formunterteils 5 sind mit Hilfe von Werkzeugmaschinen die Formkonturen nach Art eines Negativabdrucks eingearbeitet. Diese Konturen bestimmen die Form und die entsprechende Struktur eines zu fertigenden Gegenstandes 2.

Die Formvorrichtung 1 kann beispielsweise beim Spritzgussverfahren zur Herstellung von Produkten aus Kunststoff oder im Druckgussverfahren für die Herstellung von metallischen Produkten Verwendung finden.

Bei der in den Figuren 5 bis 8 gezeigten geschlossenen Stellung bilden das Formoberteil 3 und das Formunterteil 5 dazwischen einen Hohlraum oder Kavität. Beim Spritzgussverfahren wird der zu verarbeitende Werkstoff, zumeist Kunststoff, zunächst in einer getrennten Spritzvorrichtung plastifiziert, anschließend in den Hohlraum der Formvorrichtung 1 eingespritzt. Der Kunststoff kann granulatförmig vorliegen und wird erwärmt, so dass er schmilzt. Beim Druckgussverfahren wird ein zu verarbeitendes Metall zunächst geschmolzen und dann unter Druck in den Hohlraum eingepresst.

Zum Einleiten der Formmaterialmasse ist ein nicht gezeigtes Angussvorrichtung vorgesehen. Angussvorrichtungen sind bekannt und haben wesentlichen Einfluss auf die Spritzqualität oder Einpressqualität eines herzustellenden Gegenstandes 2. Oftmals wird die Schmelze über beheizte Kanalzuführungen, so genannte Heißkanäle, dem Hohlraum zugeleitet. Entscheidend für die Qualität der herzustellenden bzw. hergestellten Gegenstände sind ein konstanter Druck sowie eine konstante Temperatur, um den Hohlraum gleichmäßig auszufüllen.

Zum Einspritzen bzw. Einpressen von erwärmtem Formmaterial können sowohl das Formoberteil 3 als auch das Formunterteil 5 Durchlässe (nicht gezeigt) umfassen. Dabei kann das Einspritzen des erwärmten Formmaterials über in den Durchlässen ausgebildeten Düsen zeitgleich oder aber auch zeitversetzt erfolgen. Mit zeitversetzten Verfahren lassen sich vorteilhaft gleichmäßige Gegenstände bilden.

Um den hergestellten Gegenstand 2 aus der Form entnehmen zu können, muss dieser zunächst erhärten bzw. erstarren. Je nach Beschaffenheit des Materials erfolgt dies entweder durch Erkalten oder über eine Wärmebehandlung.

Das Formunterteil 5 kann einstückig ausgebildet sein oder aber auf einer Formplatte 9 aufgesetzt und mit dieser gekoppelt, beispielsweise verspannt sein. Ebenso kann das Formoberteil 3 mit einer Spannplatte 4 verspannt sein. Das Formunterteil 5 oder die Formplatte 9 sind über Distanzleisten 13a und 13b mit einer Aufspannplatte 11 verbunden oder gekoppelt. Die Distanzleisten 13a und 13b können einstückig mit dem Formunterteil 5 und/oder der Aufspannplatte 11 ausgebildet sein. Alternativ können Distanzleisten 13a und 13b als flexible Elemente eingesetzt werden und mit der Aufspannplatte 11 und/oder dem Formunterteil 5 bzw. der Formplatte 9 beliebig geeignet verbunden sein. Zumeist sind die Distanzleisten 13a und 13b mit der Formplatte 9 bzw. dem Formunterteil 5 und/oder der Aufspannplatte 11 verschraubt oder verspannt. Die Aufspannung der Formhälften 3, 5 und der Formvorrichtung 1 können auch mittels Spannpratzen erfolgen.

Zusätzlich sind die Formplatte 9 und/oder die Aufspannplatte 11 zur Aufspannung oftmals mit sogenannten Spannnuten (nicht gezeigt) versehen, in die die Distanzleisten 13a, b nach Art einer Nut-Feder-Führung eingeschoben werden. Solche Spannnuten ermöglichen vorteilhaft einen schnellen Wechsel der Formen und somit auch einen schnellen Wechsel der herzustellenden Gegenstände.

Eine Öffnungs/Schließvorrichtung (nicht gezeigt) öffnet und schließt die Formelemente 3 und 5 beispielsweise über einen pneumatischen, hydraulischen oder elektrisch betätigten Hubmechanismus.

Zwischen den Distanzleisten 13a und 13b sowie zwischen der Formplatte 9 und der Aufspannplatte 11 ist ein plattenförmiges Auswerfelement, eine so genannte Auswerferplatte 15, angeordnet. Die Auswerferplatte 15 dient zum Ausfahren beziehungsweise zum Ausstoßen eines hergestellten Gegenstandes 2 aus der Formhälfte 5 mittels eines Kopplungselementes 19. Dazu ist die Auswerferplatte 15 höhenverschiebbar ausgebildet. Die Auswerferplatte 15 kann direkt über einen Hydraulikzylinder oder auch einen pneumatischen Mechanismus (nicht gezeigt) oder auch elektrisch bewegt werden. Auch kann die Auswerferplatte 15 über die Formvorrichtung 1 und/oder die Öffnungs/Schließvorrichtung angetrieben werden.

In der geschlossenen Stellung ist über eine Formschlusshydraulik (nicht gezeigt) das Formoberteil 3 gegenüber dem Formunterteil 5 verschlossen. Zusätzlich kann eine Vorrichtung (nicht gezeigt), zum Zuhalten der Formteile, beispielsweise eine Hydraulik, vorgesehen sein. Somit sind eine Schließkraft zum Schließen der Formelemente 3, 5 sowie eine Haltekraft bereitgestellt, die das Formoberteil 3 und das Formunterteil 5 beim Einspritzen der Formmasse gegen den Spritz- oder Gussdruck zuhält. Der Spritzdruck wird dabei weitgehend von der Formplatte 9 abgefangen.

In der Spritzstellung liegt die Auswerferplatte 15 auf der Aufspannplatte 11 vollflächig auf (vgl. Fig. 9 und 10). In der Entnahmestellung wird die Auswerferplatte 15 über einen nicht gezeigten Hubmechanismus, beispielsweise einen Hydraulikzylinder, nach oben in Richtung der Formplatte 9 vertikal verschoben. Der Hub kann die Auswerferplatte 15 stufenlos emporheben.

Ferner kann die Formvorrichtung 1 neben einem Schieberkopf 43 eine zusätzliche Ausstoßvorrichtung (nicht gezeigt) zum Ausstoßen und/oder Auswerfen eines gespritzten oder gegossenen Gegenstandes 2 aufweisen. Dazu können beispielsweise Ausstoßbolzen im Schieberkopf 43 und oder in dem Formunterteil 5 vorgesehen sein, die einen erstarrten Gegenstand 2 aus dem Formunterteil 5 ausstoßen.

Weiter sind in der Formvorrichtung 1 ein erstes Führungselement 16 und ein zweites Führungselement 17 angeordnet. Das erste Führungselement ist als Führungsplatte 16 ausgebildet und in einer Ausnehmung in der Auswerferplatte 15 verschiebbar angeordnet. Das zweite Führungselement 17 ist als starre Führungspinole ausgebildet.

Die Führungsplatte 16 wird über die Führungspinole 17 beim Betätigen der Auswerferplatte 16 zwangsgeführt. Wenn die Auswerferplatte 15 die Führungsplatte 16 nach oben verschiebt oder nach unten führt, wird die Führungsplatte 16 entlang der Führungspinole 17 nach oben geschoben oder nach unten bewegt und/oder abgebremst. Dabei wird die Führungsplatte 16 auch seitlich versetzt, entweder beim Anheben der Auswerferplatte 16 nach links oder beim Absenken der Auswerferplatte 16 nach rechts.

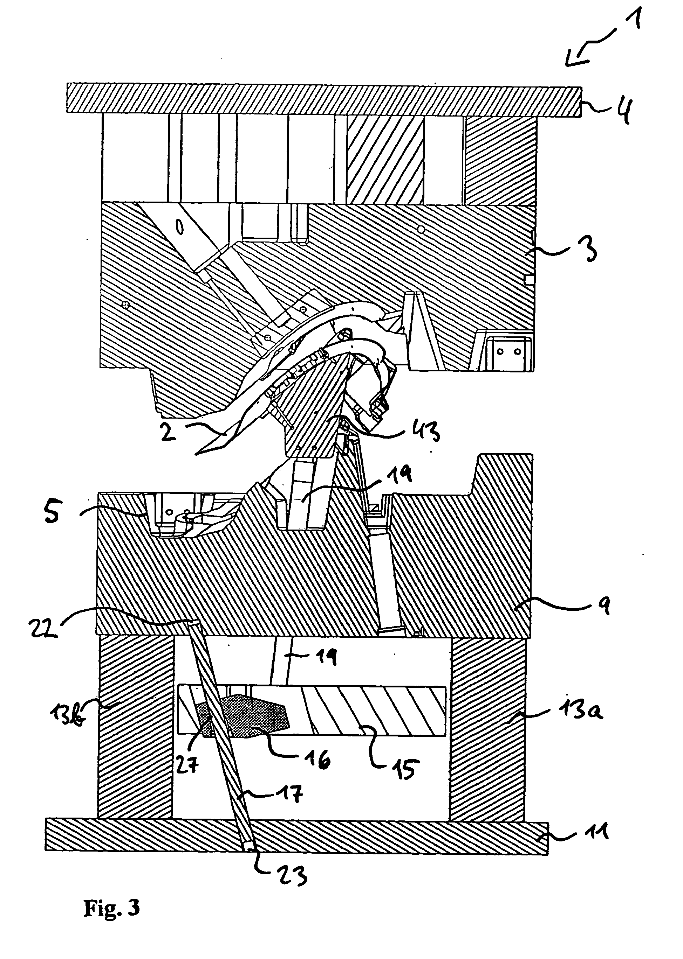

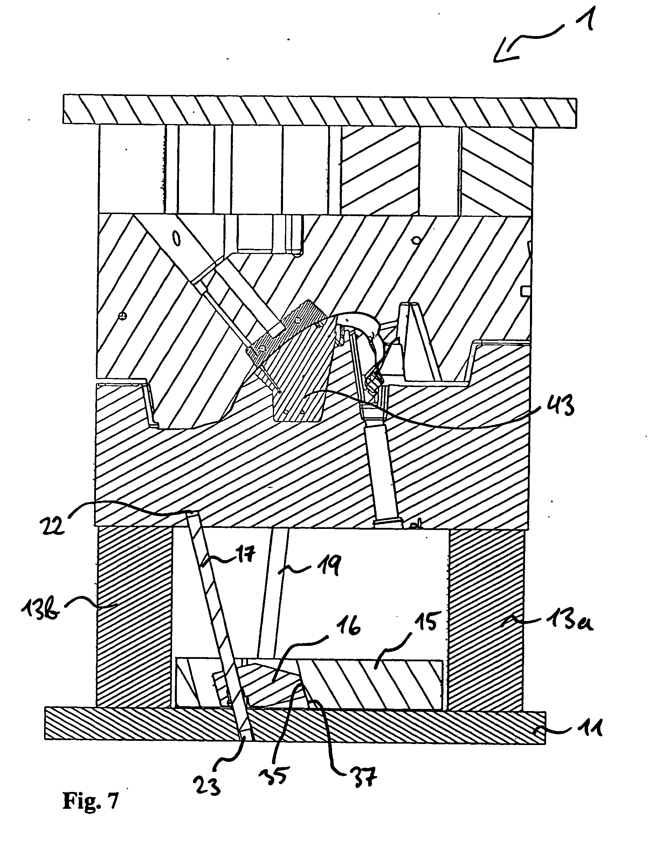

In der in Figur 7 gezeigten Spritzstellung ist die Führungsplatte 16 am unteren rechten Ende der Führungspinole 17 auf der Aufspannplatte 11 aufliegend dargestellt. Beim Betätigen der Auswerferplatte 15 in der Entnahmestellung (vgl. Figur 3) fährt die Führungsplatte 16 entlang der Führungspinole 17 nach oben und wird dabei seitlich nach links entsprechend des Verlaufs der Führungspinole 17 versetzt.

Ferner sind in der Ausnehmung der Auswerferplatte 15 jeweils beidseitig Führungsleisten oder Führungsschienen 29 zur Führung der Führungsplatte 16 angeordnet. Die Führungsschienen 29 können mit der Auswerferplatte 15 beliebig geeignet verbunden sein. Als vorteilhaft hat sich ein Verschrauben der Führungsleiste mit der Auswerferplatte 15 erwiesen. Auch können die Führungsleisten 29 seitlich mit der Führungsplatte 16 verschweißt oder anders verbunden werden. Alternativ können sie auch einstückig an der Führungsplatte 16 ausgebildet sein. Innerhalb der Führungsleisten 29 ist die Führungsplatte 16 verschiebbar gelagert,

Dazu umfassen die Führungsleisten 29 jeweils eine Ausnehmung, beispielsweise Führungsnuten, die mit der Führungsplatte 16 beispielsweise über eine an der Führungsplatte 16 ausgebildete Ausbildung 24, etwa eine Leiste, in Verbindung stehen. Die Führung erfolgt dann nach Art einer Nut Feder Führung.

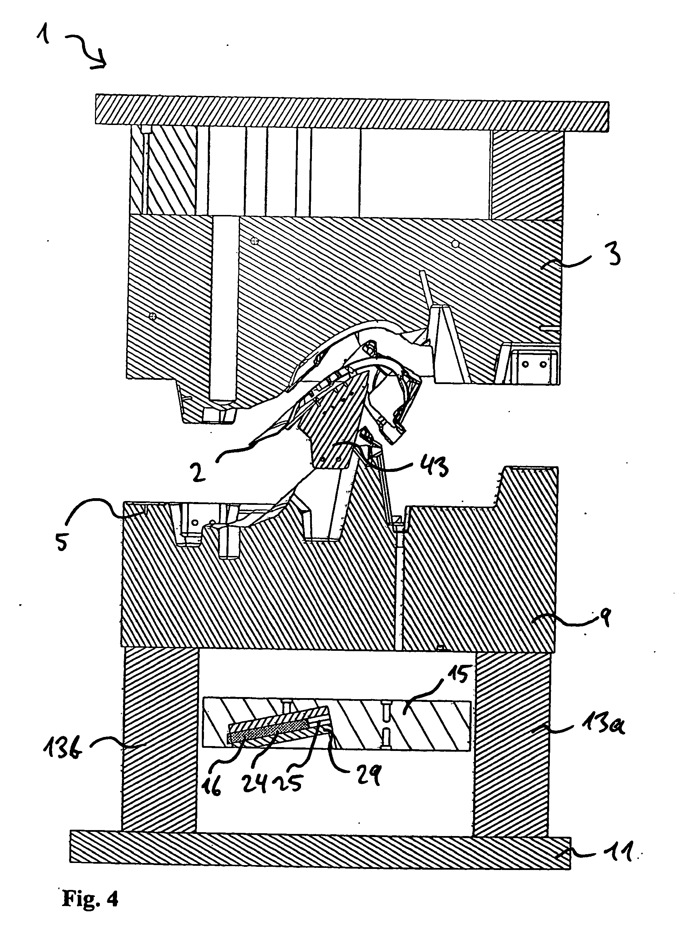

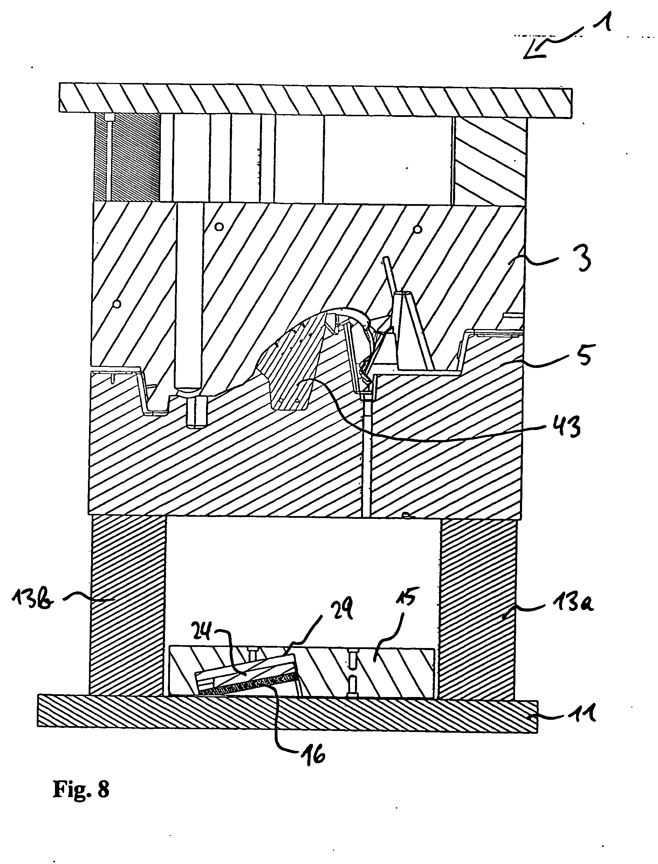

In einer geschlossenen Formvorrichtung 1 liegen die Führungsleisten 29 auf der Aufspannplatte 11 nahezu auf bzw. sind teilweise in einer in der Aufspannplatte 11 ausgebildeten Ausnehmung 33 aufgenommen (vgl. Fig. 9 und 10). In Fig. 4 und 8 ist nur die Ausbildung 24 der Führungsplatte 16 gezeigt, über die die Führungsplatte 16 in Eingriff mit den Führungsleisten 29 steht.

In der in Figur 8 gezeigten Darstellung befindet sich die Führungsplatte 16 am rechten Ende der Führungsleiste 29. Wenn die Formvorrichtung 1 geöffnet ist oder geöffnet wird kann die Auswerferplatte 15 betätigt werden. Dabei wird die Führungsplatte 16 über die Auswerferplatte 15 nach oben und über die Zwangsführung der Führungspinole 17 nach links unten verschoben. Dabei kann die Führungsplatte 16 auch je nach Anordnung der Führungsplatte 16 beispielsweise nach links oben verschoben werden. In Fig. 4 befindet sich die Ausbildung 24 der Führungsplatte 16 im linken Randbereich der Führungsleiste 29. Somit ist die gesamte Führungsplatte 16 nach links verschoben.

Ferner ist die Führungspinole 17 am oberen Ende in einer Ausnehmung 22 der Formplatte 9 eingesetzt und verankert, beispielsweise verstiftet, verschraubt oder eingelassen. Die Führungspinole 17 verläuft schräg zur Längsachse der Formvorrichtung 1, wobei sie eine in der Führungsplatte 16 angeordnete Ausnehmung 27 durchdringt. An Ihrem unteren Ende ist die Führungspinole 17 in eine in der Aufspannplatte 11 ausgebildeten Ausnehmung 23 eingesetzt. In der Ausnehmung 23 ist das untere Ende der Führungspinole 17 mit der Aufspannplatte 11 fest verbunden, vorzugsweise verstiftet, verschraubt oder eingelassen.

Zusätzlich ist in der Formplatte 9 eine durchgängige Ausnehmung 21 ausgebildet, in der das Kopplungselement, die sogenannte Führungspinole 19, eingesetzt ist. Die Führungspinole 19 ist innerhalb der Ausnehmung 21 in Längsrichtung beweglich. Sowohl die Führungspinole 19 als auch die Ausnehmung 21 sind schräg zur Längsachse der Formvorrichtung 1 angeordnet und ausgebildet. Die Führungspinole 19 wird zusammen mit der Auswerferplatte 15 nach oben gefahren.

Am oberen Ende der Führungspinole 19 ist der Schieberkopf 43 angeordnet. Der Schieberkopf 43 kann einstückig an der Führungspinole 19 ausgebildet sein oder über beliebige geeignete Befestigungsmittel (nicht gezeigt) mit der Führungspinole 19 verbunden sein, beispielsweise verschraubt. Alternativ kann die Führungspinole 19 auch eine Verbreiterung aufweisen, die auf einen hergestellten Gegenstand 2 wirkt.

Bei Betätigung der Auswerferplatte 16 wird die Führungspinole 19 nach oben gefahren und der Schieberkopf 43 hebt den hergestellten Gegenstand 2 aus dem Formunterteil 5 nach oben, wobei der hergestellte Gegenstand 2 und/oder der Schieberkopf 43 über einen Teil oder den gesamten Öffnungsvorgang zur Hauptentformungsrichtung verzögert beziehungsweise beschleunigt. Dies erfolgt über die Verschiebung der Führungsplatte 16 und/oder eine nachfolgend beschriebene Verschiebung der Führungspinole 19 innerhalb der Auswerferplatte 15. Beim Absenken der Auswerferplatte 15 werden diese Bewegungen umgekehrt.

Der Schieberkopf 43 wird in der Spritzstellung komplett in wenigstens einem Formelement 3, 5, beispielsweise in einer Ausnehmung, aufgenommen und gehalten. Bei Betätigung der Auswerferplatte 15 wird der Schieberkopf 43 aus der Ausnehmung gefahren. Beim Auswerfen beziehungsweise beim Entformen des Gegenstandes 2 kann der Schieberkopf 43 mit diesem und/oder relativ zu dem Gegenstand 2 verschoben werden, um Hinterschnitte in Richtung der Hauptentformungsrichtung (senkrecht nach oben) zu Entformen. Der Schieberkopf 43 kann also zur Hauptentformungsrichtung verschwenkt werden. Dies wird als Verzögerung und/oder Beschleunigung des Schieberkopfes 43 bezeichnet. Erfindungsgemäß lassen sich nunmehr eine Verzögerung bzw. Beschleunigung von bis zu 180° zur Hauptentformungsrichtung beziehungsweise von bis zu 90° zur Auswurfplatte 15 erreichen.

Weiter ist innerhalb der Führungspinole 19 ein Fluidkanal 41 ausgebildet. Am unteren Ende der Führungspinole 19 sind Fluideinlasse bzw. -auslasse 39 angeordnet. Der Fluidkanal 41 kann über die Fluideinlasse bzw. -auslasse 39 an einen in der Formvorrichtung 1 vorhandenen Kühlkreislauf angeschlossen werden. Darin ist ein beliebiges Kühlfluid einleitbar, um eine entsprechende Kühlung oder Erwärmung des herzustellenden Gegenstandes und/oder der Formelemente 3, 5 zu erreichen. Die Kühlung ist ein wesentlicher Faktor für den Produktionszyklus. Je stärker die Kühlung ausgelegt ist, desto eher lassen sich Zykluszeiten kürzen. Ein vollständiges Auskühlen eines zu fertigenden Gegenstandes 2 lässt sich beispielsweise innerhalb eines Zeitraums von 60 Sekunden erreichen.

Zusätzlich können auch innerhalb der Führungspinole 19 bzw. der Formteile 3 und 5 Heizvorrichtungen vorgesehen sein, um das Formmaterial in einem erwärmten Zustand zu halten. Auch kann es erforderlich sein, gegebenenfalls das Formoberteil 3 und/oder das Formunterteil 5 vor dem Einbringen einer Spritzguss- oder Druckgussmasse zunächst zu erwärmen. So verlaufen Fluidkanäle (nicht gezeigt) im Formoberteil 3 und Formunterteil 5 nahe zum Hohlraum. Ein solcher Fluidkreislauf kann die Lebensdauer der Formteile erhöhen und die Oberflächenbeschaffenheit der herzustellenden Gegenstände verbessern.

Am unteren Ende ist die Führungspinole 19 mit einer schuhartig ausgestalteten Führungseinheit 31 versehen. Die Führungseinheit 31 ist in einer kulissenartigen Führungseinrichtung seitlich verschiebbar, die innerhalb der Führungsplatte 16 angeordnet ist. Dazu ist in der Führungsplatte 16 eine Ausnehmung, insbesondere eine Führungsnut ausgebildet, in der die Führungseinheit 31 zum Verschieben geführt ist. Innerhalb der Führungseinheit 31 kann eine Gelenkverbindung zur Verbindung der Führungseinheit 31 mit der Führungspinolenstange angeordnet sein.

Beim oder nach dem Öffnen der Formhälften 3, 5 aus der Spritzstellung oder geschlossenen Stellung in die Entnahmestellung wird die Auswerferplatte 15 betätigt und angehoben, so dass die Führungseinheit 31 innerhalb der Führung entlang der Führungsnuten nach rechts verschoben und beim Schließen nach links. In Abhängigkeit von der Anordnung und dem Aufbau der einzelnen Komponenten in der Formvorrichtung 1 sind hier auch beliebige geeignet andere Verschieberichtungen möglich.

Ferner sind das Kopplungselement 19 und die Führungspinole 19 entgegengesetzt zueinander angeordnet. Über diese entgegen gesetzte Schrägstellung wird die Zwangsführung der Führungsplatte 16 betätigt. Über den Versatz der Führungsplatte 16 und über den Versatz der Führungspinole 19 lassen sich hinterschnittige Geometrien eines gefertigten Gegenstandes 2 entformen.

Figur 9 und 10 zeigen zwei weitere Schnittansichten der erfindungsgemäßen Formvorrichtung 1, wobei die Anordnung des Formunterteils 5 auf der Formplatte 9 gezeigt ist. Die Aufspannplatte 11 zeigt hier neben der Ausnehmung 23 eine weitere Ausnehmung 33, in der die Führungsplatte 16 in der geschlossenen Stellung teilweise aufgenommen wird. Der Winkel zwischen der Führungspinole 17 und der Pinole 19 wird beim Verschieben spitzer oder stumpfer, wobei sich unterschiedlich steile hinterschnittige Geometrien entformen lassen

Beim Schließen der Formvorrichtung 1 aus der geöffneten Stellung in die Schließstellung erfolgen der zuvor beschriebene Öffnungsmechanismus und die Betätigung der Auswerfplatte 15 in umgekehrter Reihenfolge. Wenn das Formoberteil 3 auf dem Formunterteil 5 aufliegt, sind beide gegeneinander verschlossen und können verriegelt werden. Als geeigneter Verriegelungsmechanismus kann ein ausreichend starker Hydraulikzylinder vorgesehen sein.

Weitere Ausgestaltungen und Variationen der vorliegenden Erfindung ergeben sich für den Fachmann im Rahmen der nachfolgenden Patentansprüche.

## Patentansprüche

1. Formvorrichtung (1) zum Spritz- oder Druckgießen zur Herstellung von geformten Gegenständen mit
- wenigstens einem ersten Formelement (3),
- wenigstens einem zweiten Formelement (5),
- wenigstens einer Öffnungsvorrichtung zum Öffnen oder Schließen der Formelemente (3; 5), und
- wenigstens einem separaten Auswurfelement (15), welches an der Rückseite eines der Formelemente (3; 5) angeordnet ist und über ein Kopplungselement (19) zum Entformen eines Gegenstandes mit wenigstens einem der Formelemente (3; 5) gekoppelt ist,
wobei ein erstes Führungselement (16) im Auswurfelement (15) verschiebbar angeordnet ist und von einem zweiten starren Führungselement (17) geführt ist,
das Kopplungselement (19) vom ersten Führungselement (16) geführt ist, und
im ersten Führungselement (16) eine Ausnehmung (27) ausgebildet ist, in die das zweite Führungselement (17) zur Bildung einer Zwangsführung einsetzbar ist,
**dadurch gekennzeichnet, dass**
das Kopplungselement (19) verschiebbar im ersten Führungselement (16) angeordnet ist, und
das zweite Führungselement (17) und das Kopplungselement (19) entgegengesetzt zueinander angeordnet sind.

2. Formvorrichtung (1) nach Anspruch 1, bei der das erste Führungselement (16) eine Ausbildung (24) umfasst, die mit einer Ausnehmung im Auswerfelement (15) zur verschiebbaren Führung des ersten Führungselements (16) zusammenwirkt.

3. Formvorrichtung (1) nach Anspruch 1, bei der das Auswerfelement (15) eine Ausbildung umfasst die mit einer Ausnehmung im ersten Führungselement (16) zur verschiebbaren Führung des ersten Führungselements (16) zusammenwirkt.

4. Formvorrichtung (1) nach einem der vorstehenden Ansprüche, bei der das Auswerfelement (15) wenigstens ein Führungsmittel (29) umfasst, das mit dem Auswerfelement (15) integral ausgebildet oder daran gekoppelt ist, um das erstes Führungselement (16) verschiebbar zu führen.

5. Formvorrichtung (1) nach einem der vorstehenden Ansprüche, bei der das Auswerfelement (15) wenigstens eine Wirkfläche (37) umfasst, die beim Betätigen des Auswerfelements (15) mit wenigstens einer am ersten Führungselement (16) ausgebildeten Gegenfläche (35) zusammenwirkt, um das Führungselement (16) anzutreiben und/oder zu führen.

6. Formvorrichtung (1) nach einem der vorstehenden Ansprüche, bei der das zweite Führungselement (17) an einem ersten Endbereich mit wenigstens einem der Formelemente (3; 5) und/oder der Formplatte (9) und/oder mit einem zweiten Endbereich mit einem Aufspannelement (11) gekoppelt ist.

7. Formvorrichtung (1) nach einem der vorstehenden Ansprüche, bei der beim Betätigen des Auswurfelementes (15) das erste Führungselement (16) und das Kopplungselement (19) entgegengesetzt zueinander verschiebbar angeordnet sind.

8. Formvorrichtung (1) nach einem der vorstehenden Ansprüche, bei der das Kopplungselement (19) eine Führungseinheit (31) umfasst, die mit einer Ausnehmung im ersten Führungselement (16) zur verschiebbaren Führung des Kopplungselements (19) zusammenwirkt.

9. Formvorrichtung (1) einem der vorstehenden Ansprüche, bei der das erste Führungselement (16) eine Ausbildung umfasst die mit einer Ausnehmung in der Führungseinheit (31) des Kopplungselements (19) zur verschiebbaren Führung des Kopplungselements (19) zusammenwirkt.

10. Formvorrichtung (1) nach einem der vorstehenden Ansprüche, bei der das Kopplungselement (19) an einem Endbereich mit einem Schieberelement (43) gekoppelt ist.

11. Formvorrichtung (1) nach einem der vorstehenden Ansprüche, bei der das Auswurfelement (15) über eine Hubvorrichtung anhebbar und absenkbar ist.

12. Formvorrichtung (1) nach einem der vorstehenden Ansprüche, bei der wenigstens ein Verriegelungsmechanismus zur Verriegelung des ersten Formelements (3) mit dem zweiten Formelements (5) vorgesehen ist.

13. Verfahren zum Entformen eines Gegenstandes in einer Formvorrichtung (1) nach einem der vorstehenden Ansprüche, umfassend die Schritte:
- Schließen eines ersten und eines zweiten Formelements (3; 5);
- Einbringen, Formen und Aushärten einer Formmasse in einem zwischen den Formelementen (3; 5) gebildeten Hohlraum (7);
- Betätigen eines separat, an der Rückseite eines der Formelemente (3; 5) angeordneten Auswurfelements (15) beim oder nach dem Öffnen der Formelemente (3; 5), wobei ein über ein Kopplungselement (19) mit wenigstens einem Formelement (3; 5) gekoppeltes erstes Führungselement (16) im Auswurfelement (15) verschoben und von einem zweiten starren Führungselement (17) geführt wird, und wobei im ersten Führungselement (16) eine Ausnehmung (27) ausgebildet ist, in der das zweite Führungselement (17) zur Bildung einer Zwangsführung geführt wird,
**dadurch gekennzeichnet, dass** das Verfahren den Schritt umfasst
- Verschieben des Kopplungselements (19), wobei das erste Führungselement (17) und das Kopplungselement (19) gegeneinander verschoben werden.

## Claims

1. A moulding apparatus (1) for injection-moulding or die-casting in order to produce shaped articles with
- at least one first moulding element (3),
- at least one second moulding element (5),
- at least one opening apparatus for opening or closing the moulding elements (3; 5), and
- at least one separate ejection element (15) which is arranged on the rear side of one of the moulding elements (3; 5) and is coupled to at least one of the moulding elements (3; 5) by way of a coupling element (19) for removing an article from the mould, wherein a first guide element (16) is arranged so as to be displaceable in the ejection element (15) and is guided by a second rigid guide element (17),
the coupling element (19) is guided by the first guide element (16), and
a recess (27), into which the second guide element (17) is capable of being introduced in order to form a forcible guide, is formed in the first guide element (16),
**characterized in that**
the coupling element (19) is arranged so as to be displaceable in the first guide element (16), and the second guide element (17) and the coupling element (19) are arranged opposite each other.

2. A moulding apparatus (1) according to claim 1, in which the first guide element (16) has a formation (24) which co-operates with a recess in the ejection element (15) for the displaceable guidance of the first guide element (16).

3. A moulding apparatus (1) according to claim 1, in which the ejection element (15) has a formation which co-operates with a recess in the first guide element (16) for the displaceable guidance of the first guide element (16).

4. A moulding apparatus (1) according to any one of the preceding claims, in which the ejection element (15) has at least one guide means (29) which is made integral with the ejection element (15) or is coupled to it, in order to guide the first guide element (16) in a displaceable manner.

5. A moulding apparatus (1) according to any one of the preceding claims, in which the ejection element (15) has at least one operative face (37) which when the ejection element (15) is actuated co-operates with at least one counter face (35) formed on the first guide element (16), in order to drive and/or to guide the guide element (16).

6. A moulding apparatus (1) according to any one of the preceding claims, in which the second guide element (17) is coupled at a first end region to at least one of the moulding elements (3; 5) and/or of the moulding plate (9) and/or by a second end region to a clamping element (11).

7. A moulding apparatus (1) according to any one of the preceding claims, in which when the ejection element (15) is actuated the first guide element (16) and the coupling element (19) are arranged so as to be displaceable in an opposed manner with respect to each other.

8. A moulding apparatus (1) according to any one of the preceding claims, in which the coupling element (19) has a guide unit (31) which co-operates with a recess in the first guide element (16) for the displaceable guidance of the coupling element (19).

9. A moulding apparatus (1) [according to] any one of the preceding claims, in which the first guide element (16) has a formation which co-operates with a recess in the guide unit (31) of the coupling element (19) for the displaceable guidance of the coupling element (19).

10. A moulding apparatus (1) according to any one of the preceding claims, in which the coupling element (19) is coupled at an end region to a slide element (43).

11. A moulding apparatus (1) according to any one of the preceding claims, in which the ejection element (15) is capable of being raised and lowered by way of a lifting apparatus.

12. A moulding apparatus (1) according to any one of the preceding claims, in which at least one locking mechanism is provided for locking the first moulding element (3) to the second moulding element (5).

13. A method of removing an article from a mould in a moulding apparatus (1) according to any one of the preceding claims, comprising the steps:
- closing a first and a second moulding element (3; 5);
- introducing, moulding and hardening a moulding compound in a cavity (7) formed between the moulding elements (3; 5);
- actuating an ejection element (15) arranged separately on the rear side of one of the moulding elements (3; 5) during or after the opening of the moulding elements (3; 5), wherein a first guide element (16) coupled to at least one moulding element (3; 5) by way of a coupling element (19) is displaced in the ejection element (15) and is guided by a second rigid guide element (17) and wherein a recess (27), in which the second guide element (17) is guided in order to form a forcible guidance, is formed in the first guide element (16), **characterized in that** the method comprises the step:
- displacing the coupling element (19), wherein the first guide element (17) [sic] and the coupling element (19) are displaced towards each other.

## Revendications

1. Dispositif de formage (1) aux fins du moulage par injection ou du moulage sous pression servant à fabriquer des objets moulés, comportant
- au moins un premier élément de formage (3),
- au moins un deuxième élément de formage (5),
- au moins un dispositif d'ouverture servant à ouvrir ou à fermer les éléments de formage (3 ; 5), et
- comportant au moins un élément d'éjection (15) séparé, qui est disposé au niveau du côté arrière d'un des éléments de formage (3 ; 5) et qui est couplé par l'intermédiaire d'un élément de couplage (19) servant à démouler un objet à au moins un des éléments de formage (3 ; 5),
un premier élément de guidage (16) étant disposé de manière à pouvoir être déplacé par coulissement dans l'élément d'éjection (15) et étant guidé par un deuxième élément de guidage (17) rigide,
l'élément de couplage (19) étant guidé par le premier élément de guidage (16), et
un évidement (27) étant réalisé dans le premier élément de guidage (16), dans lequel évidement le deuxième élément de guidage (17) peut être inséré aux fins de la formation d'un guidage forcé,
**caractérisé en ce que**
l'élément de couplage (19) est disposé dans le premier élément de guidage (16) de manière à pouvoir être déplacé par coulissement, et
**en ce que** le deuxième élément de guidage (17) et l'élément de couplage (19) sont disposés à l'opposé l'un de l'autre.

2. Dispositif de formage (1) selon la revendication 1, dans lequel le premier élément de guidage (16) comporte une réalisation (24), qui coopère avec un évidement dans l'élément d'éjection (15) pour guider de manière coulissante le premier élément de guidage (16).

3. Dispositif de formage (1) selon la revendication 1, dans lequel l'élément d'éjection (15) comporte une réalisation, qui coopère avec un évidement dans le premier élément de guidage (16) pour guider de manière coulissante le premier élément de guidage (16).

4. Dispositif de formage (1) selon l'une quelconque des revendications précédentes, dans lequel l'élément d'éjection (15) comporte au moins un moyen de guidage (29), qui est réalisé de manière solidaire avec l'élément d'éjection (15) ou qui y est couplé pour guider de manière coulissante le premier élément de guidage (16).

5. Dispositif de formage (1) selon l'une quelconque des revendications précédentes, dans lequel l'élément d'éjection (15) comporte au moins une surface active (37), qui coopère lors de l'actionnement de l'élément d'éjection (15) avec au moins une contre-surface (35) réalisée sur le premier élément de guidage (16) pour entraîner et/ou guider l'élément de guidage (16).

6. Dispositif de formage (1) selon l'une quelconque des revendications précédentes, dans lequel le deuxième élément de guidage (17) est couplé au niveau d'une première zone d'extrémité à au moins un des éléments de formage (3 ; 5) et/ou à la plaque de formage (9) et/ou au niveau d'une deuxième zone d'extrémité à un élément de serrage (11).

7. Dispositif de formage (1) selon l'une quelconque des revendications précédentes, dans lequel le premier élément de guidage (16) et l'élément de couplage (19) sont disposés à l'opposé l'un de l'autre de manière à pouvoir être déplacés par coulissement lors de l'actionnement de l'élément d'éjection (15).

8. Dispositif de formage (1) selon l'une quelconque des revendications précédentes, dans lequel l'élément de couplage (19) comporte une unité de guidage (31), qui coopère avec un évidement dans le premier élément de guidage (16) pour guider de manière coulissante l'élément de couplage (19).

9. Dispositif de formage (1) selon l'une quelconque des revendications précédentes, dans lequel le premier élément de guidage (16) comporte une réalisation, qui coopère avec un évidement dans l'unité de guidage (31) de l'élément de couplage (19) pour guider de manière coulissante l'élément de couplage (19).

10. Dispositif de formage (1) selon l'une quelconque des revendications précédentes, dans lequel l'élément de couplage (19) est couplé au niveau d'une zone d'extrémité à un élément coulissant (43).

11. Dispositif de formage (1) selon l'une quelconque des revendications précédentes, dans lequel l'élément d'éjection (15) peut être soulevé et abaissé par l'intermédiaire d'un dispositif de levage.

12. Dispositif de formage (1) selon l'une quelconque des revendications précédentes, dans lequel le mécanisme de verrouillage au moins au nombre de un est prévu pour verrouiller le premier élément de formage (3) avec le deuxième élément de formage (5).

13. Procédé servant à démouler un objet dans un dispositif de formage (1) selon l'une quelconque des revendications précédentes, comprenant les étapes suivantes consistant à :
- fermer un premier élément de formage et un deuxième élément de formage (3 ; 5) ;
- réaliser, former et durcir une masse de formage dans une cavité (7) formée entre les éléments de formage (3 ; 5) ;
- actionner un élément d'éjection (15) disposé séparément au niveau du côté arrière d'un des éléments de formage (3 ; 5) lors de l'ouverture des éléments de formage (3 ; 5) ou après celle-ci, un premier élément de guidage (16) couplé par l'intermédiaire d'un élément de couplage (19) à au moins un élément de formage (3 ; 5) étant coulissé dans l'élément d'éjection (15) et étant guidé par un deuxième élément de guidage (17) rigide, et un évidement (27) étant réalisé dans le premier élément de guidage (16), dans lequel évidement le deuxième élément de guidage (17) est guidé pour former un guidage forcé,
**caractérisé en ce que** le procédé comprend l'étape consistant à
- déplacer par coulissement l'élément de couplage (19), le premier élément de guidage (17) et l'élément de couplage (19) étant déplacés par coulissement l'un par rapport à l'autre.
